**Europäisches Patentamt**

**European Patent Office**

**Office européen des brevets**

(19)

(11) Veröffentlichungsnummer: **0 002 016**
**B1**

(12) **EUROPÄISCHE PATENTSCHRIFT**

(21) Anmeldenummer: **78101308.1**

(22) Anmeldetag: **04.11.78**

(51) Int. Cl.³: **C 01 C 1/16**

(54) Verfahren zur Reinigung von Ammoniumfluoridlösungen

(30) Priorität: **15.11.77 DE 2750943**

(43) Veröffentlichungstag der Anmeldung:
**30.05.79 Patentblatt 79/11**

(45) Bekanntmachung des Hinweises auf die Patenterteilung:
**03.09.80 Patentblatt 80/18**

(84) Benannte Vertragsstaaten:
**DE FR GB NL SE**

(56) Entgegenhaltungen:
**AT - B - 214 409**
**DE - A - 1 926 626**
**DE - A - 2 360 974**
**DE - A - 2 410 410**
**DE - B - 1 035 111**
**DE - B - 1 190 449**

(73) Patentinhaber: **Bayer AG**
**Zentralbereich Patente, Marken und Lizenzen**
**D - 5090 Leverkusen 1, Bayerwerk (DE)**

(72) Erfinder: **Kyri, Hans, Dr.**
**Gerstenkamp 5**
**D - 5000 Koeln 80 (DE)**
**Lauss, Hans-Dietrich, Dr.**
**Adamsstrasse 79**
**D - 5000 Koeln 80 (DE)**
**Schneider, Siegfried, Dr.**
**Hahnenweg 1**
**D - 5000 Koeln 80 (DE)**

Courier Press, Leamington Spa, England.

# 0 002 016

## Verfahren zur Reinigung von Ammoniumfluoridlösungen

Die vorliegende Erfindung betrifft ein Verfahren zur Reinigung technischer Ammoniumfluoridlösungen von Kieselsäure und Eisensalzen.

Technische Ammoniumfluoridlösung fällt bei verschiedenen Aufarbeitungsprozessen an. So wird z.B. bei der technischen Behandlung von wäßriger Hexafluorokieselsäure-Lösung mit Ammoniak unlösliche Kieselsäure und eine ca. 20%ige Ammoniumfluoridlösung erhalten, aus der nach Abtrennung der Kieselsäure, z.B. mit Natriumaluminatlösung, Kryolith und Ammoniak gewonnen werden können. Ferner wird technisch aus Ammoniumfloridlösungen Ammoniumbifluorid hergestellt.

An diese Endprodukte werden zum Teil sehr hohe Reinheitsforderungen gestellt, die in entsprechender Weise auch für das Ammoniumfluorid gültig sind, insbesondere bezüglich seines Gehaltes an Phosphaten, Kieselsäure und Eisenverbindungen.

Phosphationen, die z.B. aus den Rhostoffen der Düngemittelherstellung stammen, werden in die Kieselfluorwasserstaffsäure verschleppt und gelangen dann bei deren Aufarbeitung in die Ammoniumfluoridlösung. Der Gehalt an gelöster Kieselsäure stammt aus dem Anteil, der bei der Zersetzung der Hexafluorokieselwasserstoffsäure mit Ammoniak nicht vollständing ausfällt. Auch bei sehr sorgfältiger Arbeit verbleibt immer ein Rest von bis zu über 1 g $SiO_2$/l in der Ammoniumfluoridlösung.

Bei der Weiterverarbeitung einer solchen Lösung, z.B. auf Kryolith durch Umsetzung mit einer Natriumaluminatlösung, gelangt ein weiterer Anteil an $SiO_2$ aus der Aluminatlösung in das Endprodukt, und das $Fe_2O_3$ aus beiden Lösungen wird praktisch quantitativ mit dem Kryolith ausgefällt.

In der Praxis ist es daher üblich, den aus technischen Ammoniumfloridlösungen hergestellten Kryolith mit einem aus chemisch reiner Fluorwasserstoffsäure hergestellten abzumischer, damit der Kryolith insgesamt den Reinheitsanforderungen genügt. Ein solches Verfahren ist jedoch unwirtschaftlich und auch nur beschränkt durchführbar, da es an die gleichzeitige Produktion einer reinen Fluorwasserstoffsäure gebunden ist.

Nach der AT—PS 214 409 ist es bekannt, eine praktisch kieselsäurefreie Ammoniumfluoridlösung durch Umsetzung einer Lösung von kieselfluorwasserstoffsäure mit Ammoniak und Abtrennung der ausgeschiedenen Kieselsäure zu erhalten. Bei diesem Verfahren wird dem Fällungsgemisch Kaliumsulfat oder Natriumsulfat vor der Abtrennung der Kieselsäure zugesetzt.

Des weiteren ist in der DE—OS 1 926 626 ein Verfahren zur Herstellung von sehr reinem Kryolith aus Natriumfluorosilikat und Ammoniak beschrieben. Dieses bekannte Verfahren geht von Natriumfluorosilikat aus, die zu behandelnde Ammoniumfluoridlösung weist daher eine hohe Konzentration an Natriumionen auf. Eine weitere Zugabe von Natriumionen ist bei diesem bekannten Verfahren jedoch nicht vorgesehen.

Frisch gefälltes Eisen (III) oxidhydrat bindet sowohl Phosphationen als auch Kieselsäure adsorptiv und fällt diese aus einer Lösung mit aus. Solche Fällungen bzw. Mitreißeffekte sind bekannt und in der analytischen Chemie durchaus üblich.

Da sich andererseits jedoch Eisen (III) oxidhydrat in warmer Ammoniumfluoridlösung auflöst, wird die zu behandelnde Lösung durch Mitreißen zwar von $SiO_2$ gereinigt, andererseits erhöht sich jedoch die Eisenkonzentration in nicht mehr tolerierbarem Ausmaß. Deshalbt gelingt es zwar, aus einer solchen Lösung einen Kryolith mit weniger als z.B. 0,3 Gew.-% $SiO_2$ herzustellen, andererseits enthält der Kryolith aber wesentlich mehr $Fe_2O_3$ als nach den handelsüblichen Spezifikationen erwünscht ist.

Überrachenderweise wurde gefunden, daß nicht nur der Gehalt an $SiO_2$, sondern auch an gelösten Eisen (III) verbindungen in einer Ammoniumfluoridlösung drastisch gesenkt werden kann, wenn die Fällung des Eisen (III) oxidhydrates aus einer Lösung von Ammoniumfluorid durchgeführt wird, die an den Ionen der Alkalimetalle, Erdalkalimetalle, Zink, Aluminium und/oder Blei gesättigt ist. Das gleiche Ergebnis wird aber auch erzielt, wenn zuerst das Eisen (III) oxidhydrat gefällt wird, und vor dessen Abtrennung die Lösung mit den obengenannten Ionen gesättigt wird. Durch diese besondere Maßnahme wird die Eisenkonzentration der Lösung zuverlässig auf einen Wert unter 0,01 Gew.-% reduziert, ein aus einer solchen Lösung beispielsweise hergestellter Kryolith enthält nur noch einen Anteil von 0,05 Gew.-% an $Fe_2O_3$.

Gegenstand der vorliegenden Erfindung ist daher ein Verfahren zur Reinigung technischer Ammoniumfluoridlösung von Kieselsäure und Eisenionen durch Mitreißen der Kieselsäure bei der Ausfällung von Eisen (III) verbindungen bei einem pH-Wert über 8,5 und einem Gehalt der Lösung von mehr als 1 Gew.-% freiem Ammoniak, welches dadurch gekennzeichnet ist, daß Eisen (III) salz bei einer Temperatur von höchstens 30°C zu der Ammoniumfluoridlösung zugegeben wird und vor, während oder nach der Fällung, aber vor dem Abfiltrieren des Niederschlages zu der Lösung soviel eines oder mehrerer gelöster Salze der Ionen der Alkalimetalle, Erdalkalimetalle, Zink, Aluminium und/oder Blei zugefügt wird, daß die Lösung an mindestens einem dieser Ionen gesättigt ist.

Das vorliegende Verfahren ermöglicht die Abtrennung von Kieselsäure und Eisenionen in einfacher Weise, indem der zu behandelnden, verunreinigten Lösung von Ammoniumfluorid Ionen der Alkalimetalle, Erdalkalimetalle, Zink, Aluminium oder Blei, vorzugsweise Ionen der Elemente Lithium, Natrium, Kalium, Magnesium, Calcium, Barium und/oder Blei bis zu deren Sättigung zugesetzt werden. Vorzugsweise ist die Ammoniumfluoridlösung mit mindestens zwei der löslischen Salze des Lithiums,

2

Natriums, Kaliums, Magnesiums, Calciums, Bariums und/oder Bleis gesättigt.

Der Zusatz dieser Ionen geschieht in Form ihrer löslichen Salze, die jedoch nicht in das Kristallgitter beispeilsweise des Kryoliths einbaubar sein sollen. Es ist also nicht empfehlenswert, gelöste Sulfate dieser Kationen oder des dreiwertigen Eisens zu verwenden, da Sulfationen, im Gegensatz zu den erfindungsgemäß bevorzugten Chlorid- und/oder Nitrationen in das Gitter des Kryolithes eingebaut werden. Sulfationen werden daher im Sinne der Erfindung al unerwünschte Verunreinigungen angesehen. Vorzugsweise wird die verwendete Salzlösung im Kreislauf gefahren, Abwasserprobleme treten also nicht auf.

Das Eisen (III) salz kann sowohl in fester als auch gelöster Form, auch in Form von Komplexsalzen, zugesetzt werden. Es können alle Eisen (III) salze verwendet werden, die in der alkalischen Lösung einen Eisenoxidhydratniederschlag bilden.

Die genannten Kationen, die zu der erfindungsgemäßen Erniedrigung auch des Eisengehaltes in einer Ammoniumfluoridlösung führen, sind ohne Einfluß auf die Zusammensetzung des Kryoliths, da sie bis auf geringe Spuren aus der Ammoniumfluoridlösung als Fluoride ausfallen. Deshalb ist kaum ein Einfluß der kationenmenge auf den Restgehalt an Eisenionen festzustellen, so lange die Löslichkeit der betreffenden Fluoride deutlich überschritten wurde. Natriumionen beispielsweise erreichen als Zusatz bei der Eisenoxidhydratfällung eine Konzentration von etwa 1 bis 2 g Natrium/pro Liter in der gereinigten Ammoniumfluoridlösung. Sie bilden jedoch im Falle der Umsetzung der gereinigten Lösung zu Kryolith einen Bestandteil des Endproduktes.

Durch die erfindungsgemäße Maßnahme wird die Wirkung des Eisen (III) oxidhydrates also Fällungsmittel für die Kieselsäure verstärkt. So wird beispielsweise bei Zusatz von Magnesiumchlorid ein Restgehalt von 0,02 Gew.-% $SiO_2$ und bei Zusatz von Magnesiumchlorid und Natriumhydroxid zusammen sogar ein Restgehalt an $SiO_2$ unter 0,013 Gew.-% erreicht.

Ferner wurde gefunden, daß der Restgehalt der in der erfindungsgemäß behandelten Lösung verbleibenden Kieselsäure um so niedriger ist, je niedriger auch die Temperatur der Lösung bei dieser Fällung war. Eine Temperatur von 30°C sollte deshalb nicht überschritten werden, vorzugsweise wird unterhalb einer Temperatur um ca. 20°C gearbeitet.

Sowohl die Absorption der Kieselsäure an das Eisen (III) oxidhydrat als auch die Ausfällung der gelösten Eisenverbindungen durch den Zusatz weiterer Kationen sind Reaktionen deren Gleichgewichtszustand erst nach einiger Zeit erreicht wird. Es ist daher notwendig, den Kontakt zwischen der Lösung und dem Niederschlag über längere Zeit, also einige Minuten, aufrecht zu erhalten. Vorzugsweise wird die Lösung leicht gerührt und der Kontakt mindestens ca. 30 Minuten lang aufrecht erhalten.

Die nach dem erfindungsgemäßen Verfahren gereinigte Ammoniumfluoridlösung ist aufgrund ihres besonders geringen Gehaltes an Kieselsäuren und Eisenverbindungen sehr gut geeignet, um zu anderen, technisch verwertbaren Fluoriden von hoher Reinheit aufgearbeitet werden zu können.

Die vorliegende Erfindung soll durch die folgenden Beispiele noch näher erläutert werden:

### BEISPIEL 1
### (Vergleichsbeispiel)

Aus der Zersetzung einer $H_2SiF_6$-Lösung mit Ammoniak wurde nach dem Abkühlen und Abfiltrieren der Kieselsäure eine $NH_4F$-Lösung mit einer Dichte von 1,06 g/cm³, einem Gehalt von 20 Gew.-% $NH_4F$, sowie 3 Gew.-% freiem Ammoniak und einer Verunreinigung mit 0,061 Gew.-% $SiO_2$ erhalten. Diese Lösung hatte einen pH-Wert von 8,7.

1000 ml dieser Lösung wurden unter Rühren bei 80°C mit der äquivalenten Menge einer Lösung von $Na_3Al(OH)_6$ versetzt. Der ausgefallene Kryolith wurde ausgewaschen und bei 550°C calziniert. Er enthielt an Verunreinigungen: 0,40 Gew.-% $SiO_2$ und 0,04 Gew.-% $Fe_2O_3$. Dieser Kryolith muß infolge des hohen $SiO_2$-Gehaltes zur Herstellung von Aluminium zumindest mit einem großen Anteil an reinem Kryolith verschnitten werden.

### BEISPIEL 2

1000 ml einer $NH_4F$-Lösung (hergestellt wie in Beispiel 1) wurden auf 20°C gekühlt und mit einer Lösung von 2,4 g NaOH in 10 ml Wasser versetzt. Die Lösung hatte einen pH-Wert von 9.0. Dann wurde unter Rühren während etwa 3 Minuten eine Lösung von 3,5 g $FeCl_3 \cdot 6H_2O$ in 15 ml Wasser zugetropft.

Unter leichtem Rühren wurde der entstehende Niederschlag in der Lösung 45 Minuten suspendiert gehalten und dann abfiltriert.

Das Filtrat enthielt, ohne das Waschwasser des Rückstandes, in 102C ml noch 198 g $NH_4F$ von der ursprünglichen Menge von 20C g $NH_4F$. Es enthielt außerdem noch 0,022 Gew.-% $SiO_2$ und 0,0012 Gew.-% $Fe_2O_3$ in der Lösung.

Durch Umsetzen dieser Lösung mit der äquvalenten Menge $Na_3Al(OH)_6$ wurde bei 80°C Kryolith gefällt, dieser abfiltriert und bei 550°C calziniert. Der Kryolith enthielt 0,22 Gew.-% $SiO_2$ und 0,04 Gew.-% $Fe_2O_3$.

### BEISPIEL 3

1000 ml einer $NH_4F$-Lösung (hergestellt wie in Beispiel 1) wurden auf 20°C gekühlt und unter Rühren mit einer Lösung von 3,5 g $FeCl_3 \cdot 6H_2O$ in 15 ml Wasser versetzt. Der entstandene Niederschlag

# 0 002 016

wurde durch leichtes Rühren ca. 45 Minuten lang in Suspension gehalten. Dann wurde eine Lösung von 2,0 g NaOH in 20 ml Wasser zugegeben und nach weiteren 15 Minuten filtriert.

Das Filtrat enthielt 0,025 Gew.-% $SiO_2$ und 0,001 Gew.-% $Fe_2O_3$ gelöst.

## BEISPIEL 4
### (Vergleichsbeispiel)

Es wurde wie in Beispiel 3 beschrieben verfahren, jedoch ohne Zusatz der NaOH-Lösung.

Das erhaltene Filtrat enthielt 0,035 Gew.-% $SiO_2$ und 0,025 Gew.-% $Fe_2O_3$. Ein daraus hergestellter Kryolith (analog der Beschreibung in Beispiel 1 und 2) enthielt 0,27 Gew.-% $SiO_2$ und 0,15 Gew.-% $Fe_2O_3$. Er war durch das $Fe_2O_3$ deutlich braun gefärbt und ist wegen des Gehaltes an $Fe_2O_3$ für die Al-Schmelzelektrolyse nicht brauchbar.

## BEISPIELE 5 BIS 11

Es wurde genau so verfahren wie in Beispiel 3, anstelle der 2 g NaOH jedoch wurde eine Lösung der in der folgenden Tabelle aufgeführten Salze zu der $NH_4F$-Lösung zugegeben. Die zugesetzten Salzmengen waren jeweils in 50 ml Wasser gelöst.

## TABELLE:

Zu 100C ml einer 20% igen $NH_4F$-Lösung wurden 3,5 g $FeCl_3.6 H_2O$, in 15 ml Wasser gelöst, zugesetzt und nach 45 Minuten folgende Salze in 50 ml Wasser gelöst eingerihrt.

| | Salz und Menge | Analyse des Filtrates | | |
|---|---|---|---|---|
| Beispiel Nr. | | Gew.–% $SiO_2$ | Gew.–% $Fe_2O_3$ | Sonstiges Gew.–% |
| 5 | 4 g NaCl | 0,031 | 0,001 | 0,09 $Na_2O$ |
| 6 | 4 g KOH | 0,033 | 0,013 | 0,48 $K_2O$ |
| 7 | 4 g $CaCl_2$ | 0,023 | 0,005 | 0,0001 CaO |
| 8 | 4 g $MgCl_2.6 H_2O$ | 0,02 | 0,001 | 0,0001 MgO |
| 9 | 4 g $BaCl_2.2 H_2O$ | 0,02 | 0,003 | 0,0017 BaO |
| 10 | 4 g $Pb(NO_3)_2$ | 0,02 | 0,01 | 0,015 PbO |
| 11 | 4 g $MgCl_2.6 H_2O$ + 2 g NaOH | 0,012 | 0,001 | 0,16 $Na_2O$ |

## BEISPIEL 12
### (Vergleichsbeispiel)

Es wurde wie in Beispiel 4 beschrieben verfahren, jedoch die Fällung des Eisen (III) oxidhydrates wurde bei einer Temperatur der $NH_4F$-Lösung von 30°C durchgeführt.

Das gereinigte Filtrat enthielt noch 0,04 Gew.-% $SiO_2$ und 0,03 Gew.-% gelöste Eisensalze, berechnet als $Fe_2O_3$.

Ein daraus hergestellter Kryolith enthielt nur 0,3 Gew.-% $SiO_2$, aber mehr als 0,2 Gew.-% $Fe_2O_3$.

## BEISPIEL 13

Es wurde wie in Beispiel 12 beschrieben verfahren, jedoch wurde nach dem Zusatz der Eisen (III) chloridlösung eine Lösung von 2 g NaOH in 10 ml Wasser in die 30°C warme Lösung eingerührt.

Das gereinigte Filtrat entheilt nur 0,04 Gew.-% $SiO_2$ und 0,001 Gew.-% gelöste Eisensalze, berechnet als $Fe_2O_3$.

## Patentansprüche

1. Verfahren zur Reinigung technischer Ammoniumfluoridlösung von Kieselsäure und Eisenionen durch Mitreißen der Kieselsäure bei der Ausfällung von Eisen (III) verbindungen bei einem pH-Wert über 8,5 und einem Gehalt der Lösung von mehr als 1 Gew.-% freiem Ammoniak, dadurch gekennzeichnet,

daß Eisen (III) salz bei einer Temperatur von höchstens 30°C zu der Ammoniumfluoridlösung zugegeben wird und vor, während oder nach der Fällung, aber vor dem Abfiltrieren des Niederschlages, zu der Lösung soviel eines oder mehrerer der gelösten Salze der Ionen der Alkalimetalle, Erdalkalimetalle, Zink, Aluminium und/oder Blei zugefügt werden, daß die Lösung zumindest an einem dieser Ionen gesättigt ist.

2. Verfahren nach Anspruch 1, dadurch gekennzeichnet, daß die Ammoniumfluoridlösung mit mindestens zwei der löslichen Salze des Lithiums, Natriums, Kaliums, Magnesiums, Calciums, Bariums und/oder Bleis gesättigt wird.

**Revendications**

1. Procédé pour purifier une solution industrielle de fluorure d'ammonium de la silice et des ions fer par entraînement de la silice à la précipitation des composés ferriques à un pH supérieur à 8,5 et à une teneur en ammoniac libre de la solution de plus de 1% en poids, caractérisé en ce que l'on ajoute le sel de fer-III à une température maximale de 30°C à la solution de fluorure d'ammonium et avant, durant ou après la précipitation mais avant filtration du précipité, on ajoute à la solution une quantité suffisante d'un ou plusieurs sels en solution d'ions de métaux alcalins, de métaux alcalino-terreux, de zinc, d'aluminium et/ou de plomb pour que la solution soit saturée en au moins un de ces ions.

2. Procédé selon la revendication 1, caractérisé en ce que l'on sature la solution de fluorure d'ammonium d'au moins deux des sels solubles du lithium, du sodium, du potassium, du magnésium, du calcium, du baryum et/ou du plomb.

**Claims**

1. A process for the purification of commercial ammonium fluoride solution from silicic acid and iron ions by carrying down the silicic acid in the precipitation of iron (III) compounds at a pH of above 8.5, the solution containing more than 1% by weight of free ammonia, characterized in that iron (III) salt is added to the ammonium fluoride solution at a temperature of at the most 30°C and one or more of the dissolved salts of the ions of the alkali metals, alkaline earth metals, zinc, aluminium and/or lead are added in such quantities before, during or after precipitation, but before removal of the precipitate by filtration, that the solution is saturated with at least one of these ions.

2. A process according to claim 1, characterized in that the ammonium fluoride solution is saturated with at least two of the soluble salts of lithium, sodium, potassium, magnesium, calcium, barium and/or lead.